# EUROPÄISCHE PATENTSCHRIFT

(11) **EP 1 089 529 B1**
(45) Veröffentlichungstag und Bekanntmachung des Hinweises auf die Patenterteilung: **23.11.2005**
(21) Anmeldenummer: 00120876.8
(22) Anmeldetag: 25.09.2000
(51) Int. Cl.: H04M 3/22, H04M 3/42, H04M 7/00, H04Q 3/62

(54) **System zur Steuerung und Überwachung von an Nebenstellenanlagen angeschlossenen ersten oder von an Weitverkehrsnetze angekoppelten zweiten Telekommunikationsendgeräten**
System for controlling and monitoring telecommunication terminals connected to a private branch exchange (PBX) or a wide area network (WAN)
Système pour régler et surveiller de terminaux de télécommunication connectés à un autocommutateur privé (PBX) ou un réseau à grande distance (WAN)

(30) Priorität: 30.09.1999 DE 19947032
(43) Veröffentlichungstag der Anmeldung: 04.04.2001
(73) Patentinhaber: SIEMENS AKTIENGESELLSCHAFT, 80333 München (DE)
(72) Erfinder: Langer, Uwe, 33102 Paderborn (DE); Riesenbeck, Dirk, 85591 Vaterstetten (DE); Schindel, Frank, 33104 Paderborn (DE); Tanger, Erwin, 33129 Delbrück (DE); Zimmermann, Rainer, 33102 Paderborn (DE)

(56) Entgegenhaltungen:
- WO-A-98/51092
- US-A- 5 729 601
- US-A- 5 875 234

## Beschreibung

Vielfach werde, an einer Nebenstellenanlage eines Kommunikationssystems angeschlossene Telekommunikationsendgeräte von einem Computer aus gesteuert und überwacht. Hierzu sind bereits geeignete Schnittstellen zwischen Nebenstellenanlagen und Telekommunikationsendgeräten einerseits und Nebenstellenanlagen und Computereinrichtungen andererseits festgelegt. Es ist üblich, daß Nebenstellenanlagen über einen CTI-Link (Computer Telephone Integration) mittels CSTA-Protokoll (Computer Supported Telephone Application) jeweils separat gesteuert werden. Derartige Steuerungsmöglichkeiten stehen jedoch nicht für mehrere Applikationen gleichzeitig zur Verfügung.

Vergleichbare Steuerungsmöglichkeiten bestehen auch bei neuartigen Multimediaendgeräten, welche an Weitverkehrsnetze, beispielsweise Intra- oder Internet, angekoppelt sind. Zu einer definierten Menge (Domäne) gehörige Multimediaendgeräte sind durch einen geeigneten Computer steuer- und überwachbar. Allerdings ist bei Multimediaendgeräten bisher für jede Applikationsart eine separate Steuerung zu implementieren.

Bislang existieren keine integrierten Lösungen, welche eine gemeinsame Steuerung und Überwachung sowohl von an Nebenstellenanlagen angeschlossenen als auch von an Weitverkehrsnetze angekoppelten Endgeräten erlauben. Aufgrund der zunehmenden Bedeutung der Übertragung zeitkritischer Daten, insbesondere Sprach- und Multimediadaten, mittels TCP/IP erwächst in heterogenen Kommunikationsnetzen das Bedürfnis nach derartigen Steuerungs- und Überwachungsmöglichkeiten für Telekommunikationsendgeräte.

Der Erfindung liegt die Aufgabe zugrunde, ein System zu schaffen, welches die Steuerung und Überwachung von an Nebenstellenanlagen eines Kommunikationssystems angeschlossenen Telekommunikationsendgeräten oder von an Weitverkehrsnetze angekoppelten Telekommunikationsendgeräten erlaubt.

Diese Aufgabe wird erfindungsgemäß durch die Merkmale des Patentanspruchs 1 gelöst.

Durch die erfindungsgemäße Lösung ist eine netzübergreifende Steuerung insofern gewährleistet sein, daß mehrere Nebenstellenanlagen und mehrere Domänen innerhalb eines Weitverkehrsnetzes gleichzeitig gesteuert werden können.
Ein Vorteil der erfindungsgemäßen Lösung besteht darin, daß auf einem Computer ablaufende Applikationen verschiedene Anwendungsprogrammierschnittstellen zur Steuerung und Überwachung benutzen können. Dabei stehen die Steuerungs- und Überwachungsfunktionen ihrerseits für verschiedene Applikationen gleichzeitig zur Verfügung. Grundlage hierfür ist die Einführung eines einheitlichen systeminternen Datenformates, auf dessen Modell die verschiedenen Anwendungsprogrammierschnittstellen adaptiert werden. Außerdem können die Applikationen einheitlich auf verschiedene Netztypen zugreifen. Dies wird durch die Adaption verschiedener domänenspezifischer Protokolle (z.B. ACL, CSTA, H.323) auf das systeminterne Datenformat erreicht. Mit Hilfe der Steuerinformationsrouter wird ein netzwerkgrenzenübergreifender Zugriff auf Telekommunikationsendgeräte ermöglicht.

Vorteilhafte Weiterbildungen der Erfindung ergeben sich aus den abhängigen Ansprüchen 2 bis 14.

In einer bevorzugten Ausgestaltung weisen die Protokollumsetzungseinrichtungen zusätzlich Kontrolleinrichtungen auf, die als Sicherheitsmerkmal zur Überprüfung von benutzerspezifischen Berechtigungen zur Ausführung von Steuer- und Überwachungsbefehlen vorgesehen sind.

Das einheitliche systeminterne Datenformat basiert vorzugsweise auf dem CSTA-III-Protokoll. Die ersten Protokollumsetzungseinrichtungen verfügen darüber hinaus über Umsetzer auf das ACL-Protokoll oder das CSTA-Protokoll, während die zweiten Protokollumsetzungseinrichtungen vorzugsweise Umsetzer auf das H.323-Protokoll aufweisen. In einigen Anwendungsfällen ist es vorteilhaft, eine Umsetzung auf ein ATM-Protokoll anstelle des H.323-Protokolls vorzunehmen.

Die an Weitverkehrsnetze angekoppelten Telekommunikationsendgeräte basieren vorzugsweise auf Computern. Dies ermöglicht die Steuerung und Überwachung von Multimediaendgeräten über Wide Area Networks, Intranet oder über das Internet. Eine Entlastung der Instanzen der Anpassungsebene läßt sich erzielen, wenn die an Weitverkehrsnetze angekoppelten Telekommunikationsendgeräte mit eigenen applikationsbezogenen Umsetzeinrichtungen versehen sind. In ähnlicher Weise kann durch Ausrüstung der an Weitverkehrsnetze angekoppelten Telekommunikationsendgeräte mit eigenen Steuerinformationsroutern eine Entlastung auf Netzwerkebene realisiert werden. Gerade bei der Übertragung zeitkritischer Daten, insbesondere Multimediadaten, bietet dies entscheidende Vorteile.

Umsetzer vom einheitlichen systeminternen Datenformat auf das H.323-Protokoll sind vorzugsweise in einer separaten Endgerätesteuerungseinheit angeordnet. Diese Endgerätesteuerungseinheit weist eine zusätzliche Signalisierungshilfseinrichtung auf, welche den Datenfluß vom und zum Telekommunikationsendgerät steuert. Der Vorteil eines derartigen Aufbaus besteht insbesondere bei zeitkritischen Anwendungsfällen in der Entlastung der zugeordneten Protokollumsetzungseinrichtungen. In diesem Zusammenhang ist es außerdem sinnvoll, daß die zweiten Protokollumsetzungseinrichtungen ihrerseits zusätzliche Mittel zur Steuerung der Datenverbindung zu den Endgerätesteuerungseinheiten aufweisen.

Eine besonders effiziente Informationsweiterleitung läßt sich durch Ausstattung der Steuerinformationsrouter mit Registrierungseinrichtungen für die applikationsbezogenen Umsetzeinrichtungen und mit Registrierungseinrichtungen für die Protokollumsetzungseinrichtungen erzielen. Hierdurch wird die Kommunikation mit entfernten Instanzen auf Netzwerkebene beschleunigt und die Lokalisierung geeigneter Protokollumsetzungseinrichtungen vereinfacht.

Die Erfindung wird nachfolgend an Ausführungsbeispielen anhand der Zeichnung näher erläutert. Es zeigt
Figur 1 die grundlegende Struktur eines erfindungsgemäßen Systems,
Figur 2 eine Ausgestaltung einer zweiten Protokollumsetzungseinrichtung, welche zur Steuerung und Überwachung von an Weitverkehrsnetze angekoppelten Telekommunikationsendgeräten dient,
Figur 3 eine schematische Darstellung des Signalflusses bei Versenden eines Steuer- oder Überwachungsbefehles von einer auf einem Computer ablaufenden Applikation an eine Nebenstellenanlage, welche einem entfernten Steuerinformationsrouter zugeordnet ist und
Figur 4 eine schematische Darstellung des Signalflusses bei Versenden einer Ereignismeldung von einer Nebenstellenanlage an eine auf einem Computer ablaufende Applikation.

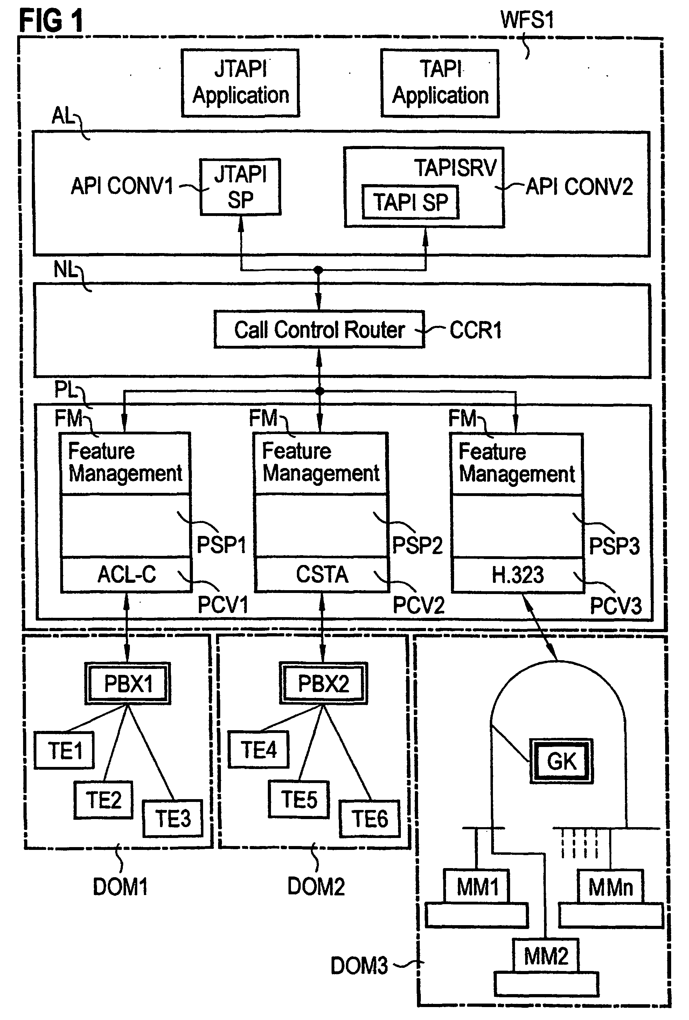

In Figur 1 wird der Aufbau eines erfindungsgemäßen Systems zur Steuerung und Überwachung von Telekommunikationsendgeräten und die Kopplung seiner Komponenten veranschaulicht. Das System läßt sich der besseren Verständlichkeit halber in drei Ebenen gliedern.

Einer Applikationsebene AL (Application Layer) sind mehrere applikationsbezogene Umsetzeinrichtungen API CONV1 und API CONV2 (API Converter) zugeordnet, welche eine Umsetzung von durch Anwendungsprogramme zugeführten Daten auf ein einheitliches systeminternes Datenformat ermöglichen. Derartige Umsetzeinrichtungen sind beispielsweise für JTAPI- oder TAPI-Applikationen unter WindowsNT realisiert. Das systeminterne Datenformat basiert auf dem CSTA-III-Protokoll, welches interne Kommunikationsobjekte, wie Calls, Devices und Connections, bereitstellt.

Auf einer Netzwerkebene NL (Network Layer) ist mindestens ein Steuerinformationsrouter CCR1 (Call Control Router) vorgesehen, welche einem Server WFS1 (Workflow Server) zugeordnet ist, von welchem Steuer- oder Überwachungsbefehle abgesetzt werden. Der Steuerinformationsrouter CCR1 dient dazu, Befehle aus der Applikationsebene AL entgegenzunehmen und zu entscheiden, in welcher Domäne DOM1, DOM2 oder DOM3 der jeweilige Befehl auszuführen ist. Ein weitere Funktion besteht darin, Meldungen aus einer Domäne DOM1, DOM2 oder DOM3 entgegenzunehmen und an eine geeignete Instanz API CONV1 oder API CONV2 der Applikationsebene AL weiterzuleiten. Außer dem Empfang und der Weiterleitung von Befehlen und Meldungen kommen dem Steuerinformationsrouter auch Vermittlungseinrichtungsaufgaben zum Aufbau einer Gesprächsverbindung zwischen Endgeräten aus unterschiedlichen Domänen zu.

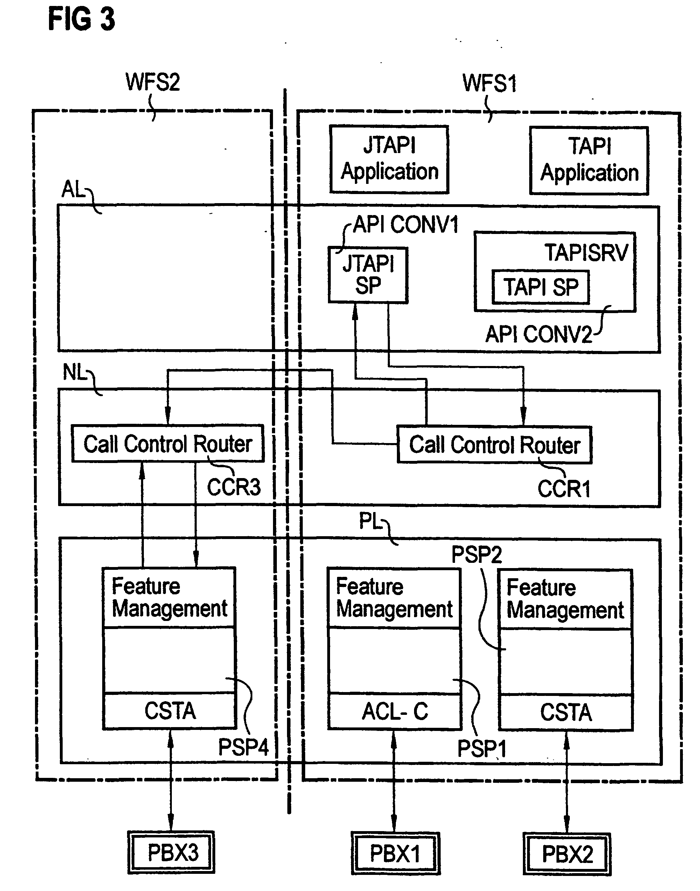

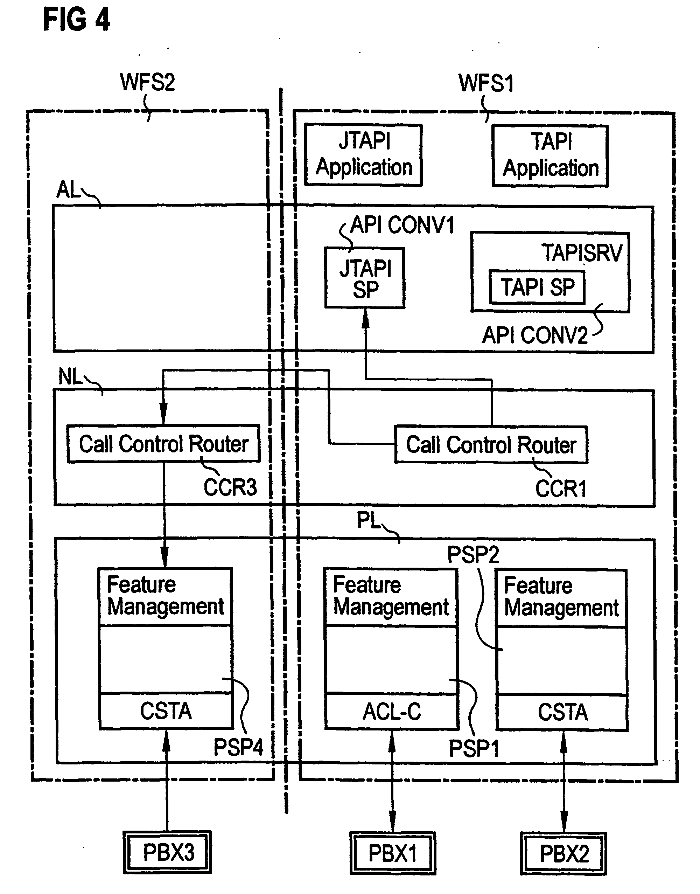

Steuerinformationsrouter CCR1, CCR3 auf verschiedenen Servern WFS1, WFS2 kommunizieren über permanent aufgebaute Verbindungen miteinander (siehe Figur 3 und 4). Dabei müssen gegebenenfalls Befehle von einer lokalen applikationsbezogenen Umsetzeinrichtung durch einen lokalen Steuerinformationsrouter CCR1 an einen entfernten Steuerinformationsrouter CCR3 übermittelt werden.

Auf einer Protokollebene (Protocol Layer) stehen Protokollumsetzungseinrichtungen PSP1, PSP2, PSP3 (Protocol Service Provider) bereit, welche die Umsetzung des systeminternen Datenformates auf domänenspezifische Kommunikationsprotokolle (ACL, CSTA, H.323) vornehmen (Figur 1). Des weiteren haben die Protokollumsetzungseinrichtungen PSP1, PSP2, PSP3 die Funktion, benutzerspezifische Berechtigungen zur Ausführung von Steuer- und Überwachungsbefehlen zu überprüfen. Diese Überprüfungen erfolgen in einer speziellen Kontrolleinrichtung FM (Feature Management). Bei Protokollumsetzungseinrichtungen sind zwei unterschiedliche Arten zu unterscheiden. Erste Protokollumsetzungseinrichtungen PSP1, PSP2 dienen zur Steuerung und Überwachung von an Nebenstellenanlagen PBX1, PBX2 angeschlossenen Telekommunikationsendgeräten TE1-TE6. Derartige Protokollumsetzungseinrichtungen PSP1, PSP2 verfügen über Einrichtungen zum Aufbau von Kommunikationsverbindungen zwischen dem Server WFS1 und den Nebenstellenanlagen PBX1, PBX2, wobei alle an einer gemeinsamen Nebenstellenanlage angeschlossenen Telekommunikationsendgeräte ein- und derselben Domäne zugeordnet sind. Die Nebenstellenanlagen PBX1, PBX2 werden über ein ACL-Protokoll bzw. ein CSTA-Protokoll gesteuert. Im letztgenannten Fall ergibt sich ein besonders geringer Aufwand für die Realisierung von Umsetzern, da das systeminterne Modell bereits auf dem CSTA-III-Protokoll basiert.

Zweite Protokollumsetzungseinrichtungen unterstützen die Steuerung und Überwachung von an Weitverkehrsnetze angekoppelten Telekommunikationsendgeräten. Im vorliegenden Fall handelt es sich bei den an ein Weitverkehrsnetz WAN angekoppelten Telekommunikationsendgeräten MM1-MMn um Multimediaterminals. Die Multimediaterminals MM1-MMn sind innerhalb einer Domäne DOM3 des Weitverkehrsnetzes WAN mit einer zentralen Überwachungs- und Verbindungssignalisierungseinheit GK, dem Gatekeeper, gekoppelt, welcher zu jedem Zeitpunkt alle angemeldeten Multimediaterminals MM1-MMn und deren IP-Adressen registriert.

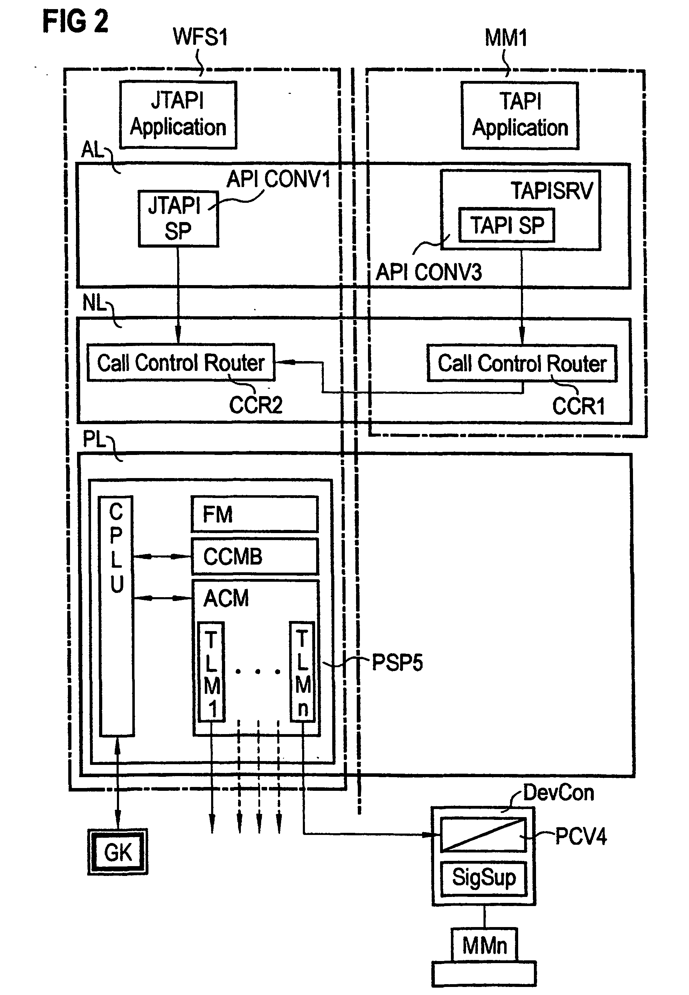

Die Funktion einer zweiten Protokollumsetzungseinrichtung PSP3 besteht ferner im Aufbau von Datenverbindungen und in der Ergänzung struktureller Zusatzinformationen im systeminternen Datenformat. Eine in Figur 2 dargestellte Protokollaufbaueinrichtung CCMB (Call Control Model Builder) ist zur Ergänzung der strukturellen Zusatzinformationen erforderlich, da das im betrachteten Weitverkehrsnetz WAN verwendete H.323-Protokoll beispielsweise über kein eigenes Steuerungsprotokoll verfügt. Dies bedeutet, daß bestimmte Kommunikationsobjekte durch zweite Protokollumsetzungseinrichtungen aufgebaut werden müssen.

Wie Figur 2 zu entnehmen ist, verfügen zweite Protokollumsetzungseinrichtungen über eine Koppeleinrichtung CPLU (Coupling Unit) zum Gatekeeper GK. Dabei stellt die Koppeleinrichtung CPLU das Bindeglied zwischen dem Gatekeeper GK und einer Verwaltungseinheit ACM (Active Client Manager) zur Erfassung angemeldeter Multimediaterminals dar. Die Information, welche Multimediaterminals in der H.323-Domäne angemeldet sind, kann entweder beim Gatekeeper GK abgefragt werden oder wird durch den Gatekeeper GK bei An- bzw. Abmeldevorgängen mitgeteilt. Bei dem in Figur 2 dargestellten Ausführungsbeispiel erfolgt die Umsetzung vom systeminternen Datenformat auf das domänenspezifische Kommunikationsprotokoll H.323 in einer Endgerätesteuerungseinheit DevCon (Device Control) für ein fest zugeordnetes Multimediaterminal MMn. Die Endgerätesteuerungseinheit DevCon weist außerdem eine Signalisierungshilfseinrichtung SigSup (Signalizing Support Unit) auf, welche in Zusammenwirkung mit einer in der Protokollumsetzungseinrichtung PSP5 beinhalteten Steuerungseinrichtung TLMn die Datenverbindung zwischen der Endgerätesteuerungseinheit DevCon und der Protokollebene PL steuert.

Die Ausführung von Steuer- und Überwachungsbefehlen ist auch von einem Multimediaterminal MM1 aus möglich. Dazu muß das Multimediaterminal MM1 jedoch über eine eigene applikationsbezogene Umsetzeinrichtung API CONV3 und über einen eigenen Steuerinformationsrouter CCR2 verfügen. Wie in Figur 2 angedeutet, ist damit die Steuerung eines anderen Multimediaterminals MMn möglich. Hierzu nimmt ein dem steuernden Multimediaterminal MM1 zugeordneter Steuerinformationsrouter CCR2 einen Befehl aus der Applikationsebene AL entgegen und übermittelt diesen an einen weiteren Steuerinformationsrouter CCR1 auf der Netzwerkebene NL, welcher eine geeignete Protokollumsetzungseinrichtung PSP3 auswählt und ansteuert.

Figur 3 veranschaulicht den Signalfluß und die Aktivitäten bei Versenden eines Steuer- oder Überwachungsbefehles von einer auf einem ersten Server WFS1 ablaufenden Applikation an eine Nebenstellenanlage PBX3, welche durch einen entfernten zweiten Server WFS2 gesteuert wird. Zunächst werden die applikationsbezogenen Umsetzeinrichtungen API CONV1, API CONV2 durch den Steuerinformationsrouter CCR1 auf dem ersten Server WFS1 registriert. Hierdurch wird eine Datenverbindung zwischen dem ersten Steuerinformationsrouter CCR1 und einer ersten applikationsbezogenen Umsetzeinrichtung API CONV1 aufgebaut. Aufgrund dessen kann von der Applikationsebene AL aus eine Dienstanforderung abgesetzt werden. Diese Dienstanforderung wird vom ersten Steuerinformationsrouter CCR1 über die aufgebaute Datenverbindung empfangen. Die Dienstanforderung wird vom ersten Steuerinformationsrouter CCR1 ausgewertet und an einen geeigneten zweiten Steuerinformationsrouter CCR3 weitergeleitet, welche dem zweiten Server WFS2 zugeordnet ist. Des weiteren ordnet der erste Steuerinformationsrouter CCR1 die Dienstanforderung der aufrufenden Applikation zur späteren Rückverfolgung zu.

Zwischen dem ersten und dem zweiten Steuerinformationsrouter wird eine Datenverbindung zum Austausch der Dienstanforderung eingerichtet, worauf die Dienstanforderung an den zweiten Steuerinformationsrouter CCR3 übermittelt wird. Der zweite Steuerinformationsrouter CCR3 nimmt eine Auswertung der Dienstanforderung vor, um eine geeignete Protokollumsetzungseinrichtung PSP4 auszuwählen, an welches die Dienstanforderung weiterzuleiten ist. Ferner ordnet der zweite Steuerinformationsrouter CCR3 die Dienstanforderung logisch dem ersten Steuerinformationsrouter CCR1 zu, da von diesem die Dienstanforderung übermittelt wurde. Dies dient ebenfalls der späteren Rückverfolgung der Dienstaufforderung.

Vom zweiten Steuerinformationsrouter CCR3 wird nun die Dienstanforderung an die ausgewählte Protokollumsetzungseinrichtung PSP4 weitergeleitet. In der Protokollumsetzungseinrichtung PSP4 erfolgt zunächst eine Überprüfung, ob die Dienstanforderung auszuführen oder zurückzuweisen ist. Danach erfolgt eine Umsetzung der Dienstanforderung in eine domänenprotokollspezifische Meldung. Die Meldung wird dann an eine ausgewählte Nebenstellenanlage PBX3 geleitet, worauf die Nebenstellenanlage PBX3 mit einer Antwortmeldung an die zugeordnete Protokollumsetzungseinrichtung PSP4 reagiert. Durch diese Protokollumsetzungseinrichtung PSP4 wird die Antwort auf das systeminterne Datenformat umgewandelt. Danach wird die umgewandelte Antwort an den zweiten Steuerinformationsrouter CCR3 gesendet.

Mit Hilfe der im zweiten Steuerinformationsrouter CCR3 festgehaltenen Rückverfolgungsinformation wird der erste Steuerinformationsrouter CCR1 als diejenige Instanz auf der Netzwerkebene NL ermittelt, von welcher die Dienstanforderung ausging. Die Antwort wird nun vom zweiten Steuerinformationsrouter CCR3 an den ersten Steuerinformationsrouter CCR1 gesendet. Dort findet mit Hilfe der eingangs vorgenommenen Zuordnung der Dienstanforderung zur aufrufenden Applikation die Rückverfolgung der aufrufenden Applikation statt. Schließlich wird die Antwort vom ersten Steuerinformationsrouter CCR1 an die ermittelte Applikation gesendet.

Beim Start eines Überwachungsauftrages ist besonders darauf zu achten, daß jeweils nur ein Überwachungsauftrag pro Telekommunikationsendgerät gestartet werden darf. Dies bedeutet, daß eine Überwachungsanforderung mitunter nicht vom Steuerinformationsrouter an die Nebenstellenanlage weitergesendet wird, falls bereits ein weiterer Überwachungsauftrag aktiv ist. Es könnte allenfalls eine Modifikation der Parameter des bestehenden Überwachungsauftrages vorgenommen werden. Entsprechendes gilt für die Beendigung eines Überwachungsauftrages.

Figur 4 verdeutlicht die Übermittlung einer Ereignismitteilung von einer Nebenstellenanlage PBX3 an eine Applikation. Die Nebenstellenanlage PBX3 sendet zunächst die codierte Ereignismitteilung an den zweiten Server WFS2. Die Protokollumsetzungseinrichtung PSP4 auf dem zweiten Server WFS2 empfängt und decodiert die Ereignismeldung. Die Protokollumsetzungseinrichtung PSP4 generiert daraufhin ein internes Ereignis und liefert die Information darüber an den zweiten Steuerinformationsrouter CCR3. In einigen Fällen kann es vorkommen, daß mehrere Kopien der Ereignismeldung an verschiedene Steuerinformationsrouter gesendet werden müssen. Die Ereignismeldung wird nachfolgend durch den zweiten Steuerinformationsrouter CCR3 ausgewertet. Als Ergebnis dieser Auswertung wird die Ereignismitteilung an den ersten Steuerinformationsrouter CCR1 weitergeleitet. Abschließend wird die Ereignismeldung durch den ersten Steuerinformationsrouter CCR1 einer geeigneten Anwendung zugeordnet und an diese übermittelt.

## Patentansprüche

1. System zur Steuerung und Überwachung von ersten, an Nebenstellenanlagen oder von zweiten an Weitverkehrsnetze angekoppelten Telekommunikationsendgeräten mit
- mindestens einer applikationsbezogenen Umsetzeinrichtung (API CONV1, API CONV2, API CONV 3) zur Protokollumwandlung von durch Anwendungsprogramme zugeführten Daten auf ein einheitliches systeminternes Datenformat und
- mindestens einem Steuerinformationsrouter (CCR1, CCR2, CCR3),
der eine erste Empfangseinrichtung zur Entgegennahme von Befehlen von einer applikationsbezogenen Umsetzeinrichtung sowie deren Weiterleitung über eine Protokollumsetzungseinrichtung (PSP1, PSP2, PSP3, PSP4, PSP 5) an einander logisch zugeordnete, eine Domäne (DOM1, DOM2, DOM3) bildende Endgeräte (TE1-TE3; TE4-TE6; MM1-MMn) aufweist,
und der eine zweite Empfangseinrichtung zur Entgegennahme von Meldungen aus einer Domäne sowie deren Weiterleitung über eine Protokollumsetzungseinrichtung an eine applikationsbezogene Umsetzeinrichtung aufweist,
wobei die Protokollumsetzungseinrichtungen zur Umsetzung des einheitlichen systeminternen Datenformates auf domänenspezifische Kommunikationsprotokolle vorgesehen sind,
und erste Protokollumsetzungseinrichtungen (PSP1, PSP2, PSP4) an Nebenstellenanlagen (PBX1, PBX2, PBX3)
und zweite Protokollumsetzungseinrichtungen (PSP3, PSP 5) an Weitverkehrsnetze gekoppelt sind
und die zweiten Protokollumsetzungseinrichtungen eine Protokollaufbaueinrichtung (CCMB) zur Ergänzung struktureller Zusatzinformationen im systeminternen Datenformat, eine Koppeleinrichtung (CPLU) zu einer zentralen Überwachungs- und Verbindungssignalisierungseinheit (GK) einer Domäne (DOM3) innerhalb eines Weitverkehrsnetzes und eine Verwaltungseinheit (ACM) zur Erfassung angemeldeter Endgeräte der Weitverkehrsnetze aufweisen.

2. System nach Anspruch 1,
**dadurch gekennzeichnet,**
**daß** die Protokollumsetzungseinrichtungen (PSP1, PSP2, PSP3, PSP4, PSP 5) Kontrolleinrichtungen (FM) zur Überprüfung von benutzerspezifischen Berechtigungen zur Ausführung von Steuer- und Überwachungsbefehlen aufweisen.

3. System nach Anspruch 1 oder 2,
**dadurch gekennzeichnet,**
**daß** die ersten Protokollumsetzungseinrichtungen (PSP1, PSP2, PSP4) Kommunikationseinrichtungen zum Aufbau von Kommunikationsverbindungen zwischen Computern und Nebenstellenanlagen aufweisen.

4. System nach einem der Ansprüche 1 bis 3,
**dadurch gekennzeichnet,**
**daß** die zweiten Protokollumsetzungseinrichtungen (PSP3, PSP 5) Kommunikationseinrichtungen (TLM1-TLMn) zum Aufbau von Datenverbindungen aufweisen.

5. System nach einem der Ansprüche 1 bis 4,
**dadurch gekennzeichnet,**
**daß** das einheitliche systeminterne Datenformat auf dem CSTA-III-Protokoll basiert.

6. System nach einem der Ansprüche 1 bis 5,
**dadurch gekennzeichnet,**
**daß** die ersten Protokollumsetzungseinrichtungen (PSP1, PSP2, PSP4) Umsetzer (PCV2) vom einheitlichen systeminternen Datenformat auf das CSTA-Protokoll aufweisen.

7. System nach einem der Ansprüche 1 bis 6,
**dadurch gekennzeichnet,**
**daß** die ersten Protokollumsetzungseinrichtungen (PSP1, PSP2, PSP4) Umsetzer (PCV1) vom einheitlichen systeminternen Datenformat auf das ACL-Protokoll aufweisen.

8. System nach einem der Ansprüche 1 bis 7,
**dadurch gekennzeichnet,**
**daß** die zweiten Protokollumsetzungseinrichtungen (PSP3, PSP 5) Umsetzer (PCV3, PCV 4) vom einheitlichen systeminternen Datenformat auf das H.323-Protokoll aufweisen.

9. System nach Anspruch 8,
**dadurch gekennzeichnet,**
**daß** die Umsetzer (PCV4) der zweiten Protokollumsetzungseinrichtungen (PSP3) zusammen mit einer zusätzlichen Signalisierungshilfseinrichtung (SigSup) in einer separaten Endgerätesteuerungseinheit (DevCon) angeordnet sind.

10. System nach einem der Ansprüche 1 bis 9,
**dadurch gekennzeichnet,**
**daß** die an Weitverkehrsnetze angekoppelten Endgeräte (MM1-MMn) auf Computern basieren.

11. System nach Anspruch 10,
**dadurch gekennzeichnet,**
**daß** die an Weitverkehrsnetze angekoppelten Endgeräte (MM1-MMn) über eigene applikationsbezogene Umsetzeinrichtungen (API CONV3) verfügen.

12. System nach Anspruch 10 oder 11,
**dadurch gekennzeichnet,**
**daß** die an Weitverkehrsnetze angekoppelten Endgeräte (MM1-MMn) über eigene Steuerinformationsrouter (CCR2) verfügen.

13. System nach einem der Ansprüche 1 bis 12,
**dadurch gekennzeichnet,**
**daß** die Steuerinformationsrouter (CCR1, CCR2, CCR3) Registrierungseinrichtungen für applikationsbezogene Umsetzeinrichtungen (API CONV1, API CONV2, API CONV 3) aufweisen.

14. System nach einem der Ansprüche 1 bis 13,
**dadurch gekennzeichnet,**
**daß** die Steuerinformationsrouter (CCR1, CCR2, CCR3) Registrierungseinrichtungen für Protokollumsetzungseinrichtungen (PSP1, PSP2, PSP3, PSP4, PSP 5) aufweisen.

## Claims

1. System for controlling and monitoring first telecommunication terminals connected to private branch exchanges or second telecommunication terminals connected to wide area networks with
- at least one application-related conversion facility (API CONV1, API CONV2, API CONV3) for protocol conversion of data supplied by application programs to a standard intra-system data format and
- at least one call control router (CCR1, CCR2, CCR3), having a first receive facility for receiving commands from an application-related conversion facility and forwarding them via a protocol service provider (PSP1, PSP2, PSP3, PSP4, PSP5) to terminals (TE1-TE3; TE4-TE6; MM1-MMn) logically assigned to each other and forming a domain (DOM1, DOM2, DOM3), and having a second receive facility for receiving reports from a domain and forwarding them via a protocol service provider to an application-related conversion facility,
in which the protocol service providers are provided to convert the standard intra-system data format to domain-specific communication protocols,
and first protocol service providers (PSP1, PSP2, PSP4) are connected to private branch exchanges (PBX1, PBX2, PBX3) and second protocol service providers (PSP3, PSP5) are connected to wide area networks,
and the second protocol service providers have a protocol setup facility or call control model builder (CCMB) to supplement additional structural information in the intra-system data format, a coupling unit (CPLU) to a central monitoring and connection signalling unit (GK) of a domain (DOM3) within a wide area network and a management unit (ACM) to record terminals logged into the wide area networks.

2. System according to claim 1,
**characterised in that** the protocol service providers (PSP1, PSP2, PSP3, PSP4, PSP5) have control facilities or feature management (FM) to verify user-specific authorisations to execute control and monitoring commands.

3. System according to claim 1 or 2,
**characterised in that** the first protocol service providers (PSP1, PSP2, PSP4) have communication facilities to set up communication connections between computers and private branch exchanges.

4. System according to one of claims 1 to 3,
**characterised in that** the second protocol service providers (PSP3, PSP5) have communication facilities (TLM1-TLMn) to set up data connections.

5. System according to one of claims 1 to 4,
**characterised in that** the standard intra-system data format is based on the CSTA-III protocol.

6. System according to one of claims 1 to 5,
**characterised in that** the first protocol service providers (PSP1, PSP2, PSP4) have converters (PCV2) from the standard intra-system data format to the CSTA protocol.

7. System according to one of claims 1 to 6,
**characterised in that** the first protocol service providers (PSP1, PSP2, PSP4) have converters (PCV1) from the standard intra-system data format to the ACL protocol.

8. System according to one of claims 1 to 7,
**characterised in that** the second protocol service providers (PSP3, PSP5) have converters (PCV3, PCV4) from the standard intra-system data format to the H.323 protocol.

9. System according to claim 8,
**characterised in that** the converters (PCV4) of the second protocol service providers (PSP3) are arranged together with an additional signalling support unit (SigSup) in a separate terminal control unit or device control (DevCon).

10. System according to one of claims 1 to 9,
**characterised in that** the terminals (MM1-MMn) connected to wide area networks are computer-based.

11. System according to claim 10,
**characterised in that** the terminals (MM1-MMn) connected to wide area networks have specific application-related conversion facilities (API CONV3).

12. System according to claim 10 or 11,
**characterised in that** the terminals (MM1-MMn) connected to wide area networks have specific call control routers (CCR2).

13. System according to one of claims 1 to 12,
**characterised in that** the call control routers (CCR1, CCR2, CCR3) have registration facilities for application-related conversion facilities (API CONV1, API CONV2, API CONV3).

14. System according to one of claims 1 to 13,
**characterised in that** the call control routers (CCR1, CCR2, CCR3) have registration facilities for protocol service providers (PSP1, PSP2, PSP3, PSP4, PSP5).

## Revendications

1. Système pour la commande et la surveillance de premiers terminaux de télécommunication connectés à des autocommutateurs privés ou de seconds terminaux de télécommunication connectés à des réseaux à grande distance, comprenant
- au moins un dispositif de conversion relatif à une application (API CONV1, API CONV2, API CONV3) pour la conversion de protocole de données alimentées par des programmes d'application à un format de données homogène interne au système et
- au moins un routeur d'informations de commande (CCR1, CCR2, CCR3)
qui est pourvu d'un premier dispositif de réception pour la réception d'ordres d'un dispositif de conversion relatif à une application et leur transmission, par le biais d'un dispositif de conversion de protocole (PSP1, PSP2, PSP3, PSP4, PSP5), à des terminaux (TE1-TE3; TE4-TE6; MM1-MMn) associés logiquement les uns aux autres formant un domaine (DOM1, DOM2, DOM3)
et est pourvu d'un second dispositif de réception pour la réception de messages venant d'un domaine et leur transmission, par le biais d'un dispositif de conversion de protocole, à un dispositif de conversion relatif à une application,
les dispositifs de conversion de protocole étant prévus pour la conversion du format de données homogène interne au système à des protocoles de communication spécifiques aux domaines et des premiers dispositifs de conversion de protocole (PSP1, PSP2, PSP4) étant couplés à des autocommutateurs privés (PBX1, PBX2, PBX3)
et des seconds dispositifs de conversion de protocole (PSP3, PSP5) étant couplés à des réseaux à grande distance
et les seconds dispositifs de conversion de protocole comprenant un dispositif d'établissement de protocole (CCMB) pour compléter des informations additionnelles structurelles dans le format de données interne au système, un dispositif de couplage (CPLU) à une unité centrale de surveillance et de signalisation de connexion (GK) d'un domaine (DOM3) à l'intérieur d'un réseau à grande distance et une unité de gestion (ACM) pour la saisie de terminaux enregistrés des réseaux à grande distance.

2. Système selon la revendication 1,
**caractérisé en ce que**
les dispositifs de conversion de protocole (PSP1, PSP2, PSP3, PSP4, PSP5) sont pourvus de dispositifs de contrôle (FM) pour contrôler les droits spécifiques aux utilisateurs d'exécuter des ordres de commande et de surveillance.

3. Système selon la revendication 1 ou 2,
**caractérisé en ce que**
les premiers dispositifs de conversion de protocole (PSP1, PSP2, PSP4) sont pourvus de dispositifs de communication pour établir des liaisons de communication entre des ordinateurs et des autocommutateurs privés.

4. Système selon l'une des revendications 1 à 3,
**caractérisé en ce que**
les seconds dispositifs de conversion de protocole (PSP3, PSP5) sont pourvus de dispositifs de communication (TLM1-TLMn) pour l'établissement de liaisons de données.

5. Système selon l'une des revendications 1 à 4,
**caractérisé en ce que**
le format de données homogène interne au système est basé sur le protocole CSTA-III.

6. Système selon l'une des revendications 1 à 5,
**caractérisé en ce que**
les premiers dispositifs de conversion de protocole (PSP1, PSP2, PSP4) sont pourvus de convertisseurs (PCV2) du format de données homogène interne au système au protocole CSTA.

7. Système selon l'une des revendications 1 à 6,
**caractérisé en ce que**
les premiers dispositifs de conversion de protocole (PSP1, PSP2, PSP4) comprennent des convertisseurs (PCV1) du format de données homogène interne au système au protocole ACL.

8. Système selon l'une des revendications 1 à 7,
**caractérisé en ce que**
les seconds dispositifs de conversion de protocole (PSP3, PSP5) sont pourvus de convertisseurs (PCV3, PCV4) du format de données homogène interne au système au protocole H.323.

9. Système selon la revendication 8,
**caractérisé en ce que**
les convertisseurs (PCV4) des seconds dispositifs de conversion de protocole (PSP3) sont situés, avec un dispositif auxiliaire de signalisation (SigSup) supplémentaire, dans une unité de commande de terminaux séparée (DevCon).

10. Système selon l'une des revendications 1 à 9,
**caractérisé en ce que**
les terminaux (MM1-MMn) connectés à des réseaux à grande distance sont basés sur des ordinateurs.

11. Système selon la revendication 10,
**caractérisé en ce que**
les terminaux (MM1-MMn) connectés à des réseaux à grande distance disposent de leurs propres dispositifs de conversion relatifs aux applications (API CONV3).

12. Système selon la revendication 10 ou 11,
**caractérisé en ce que**
les terminaux (MM1-MMn) connectés à des réseaux à grande distance disposent de leurs propres routeurs d'informations de commande (CCR2).

13. Système selon l'une des revendications 1 à 12,
**caractérisé en ce que**
les routeurs d'informations de commande (CCR1, CCR2, CCR3) sont pourvus de dispositifs d'enregistrement pour les dispositifs de conversion relatifs aux applications (API CONV1, API CONV2, API CONV3).

14. Système selon l'une des revendications 1 à 13,
**caractérisé en ce que**
les routeurs d'informations de commande (CCR1, CCR2, CCR3) sont pourvus de dispositifs d'enregistrement pour les dispositifs de conversion de protocole (PSP1, PSP2, PSP3, PSP4, PSP5).
